# EUROPÄISCHE PATENTSCHRIFT

(11) **EP 2 906 984 B1**
(45) Veröffentlichungstag und Bekanntmachung des Hinweises auf die Patenterteilung: **23.02.2022**
(21) Anmeldenummer: 13779171.1
(22) Anmeldetag: 09.10.2013
(51) Int. Cl.: G02B 21/36, G02B 21/06, G02B 21/24, G02B 21/00, G06T 7/00

(54) **MIKROSKOP UND VERFAHREN ZUR SPIM MIKROSKOPIE**
MICROSCOPE AND METHOD FOR SPIM MICROSCOPY
MICROSCOPE ET PROCÉDÉ DE MICROSCOPIE SPIM

(30) Priorität: 12.10.2012 DE 102012020240
(43) Veröffentlichungstag der Anmeldung: 19.08.2015
(73) Patentinhaber: Carl Zeiss Microscopy GmbH, 07745 Jena (DE)
(72) Erfinder: HILBERT, Wiebke, 07749 Jena (DE); LIPPERT, Helmut, 07745 Jena (DE)
(74) Vertreter: Loritz, Rainer
(86) Internationale Anmeldenummer: PCT/EP2013/071077
(87) Internationale Veröffentlichungsnummer: WO 2014/056992

(56) Entgegenhaltungen:
- WO-A1-2008/125204
- DE-A1-102007 045 897
- US-A1- 2011 115 895
- US-A1- 2011 304 723
- FLORIAN O. FAHRBACH ET AL: "Rapid 3D light-sheet microscopy with a tunable lens", OPTICS EXPRESS, Bd. 21, Nr. 18, 30. August 2013 (2013-08-30), Seite 21010, XP055089699, ISSN: 1094-4087, DOI: 10.1364/OE.21.021010

## Beschreibung

Die Erfindung betrifft ein Mikroskop, welches ein Abbildungsobjektiv zur Abbildung einer Probe auf einen Detektor sowie Mittel zur Beleuchtung der Probe mit einem Lichtblatt in der Fokusebene des Abbildungsobjektivs bzw. in einer definierten Ebene in der Nähe der dieser Fokusebene umfasst. Die Mittel zur Beleuchtung umfassen eine vorzugsweise kohärentes Licht abstrahlende Beleuchtungsquelle.

Ein Mikroskop, bei dem Beleuchtungsstrahlengang und Detektionsstrahlengang im Wesentlichen senkrecht zueinander angeordnet sind, und bei der die Probe mit einem Lichtblatt in der Fokusebene des Abbildungsobjektivs, d.h. senkrecht zu dessen optischer Achse, beleuchtet wird, ist für die Untersuchung von Proben nach dem Verfahren der Selective-Plane-Illumination-Microscopy (SPIM) ausgelegt. Im Unterschied zur konfokalen Laser-Scanning-Mikroskopie (LSM), bei der eine dreidimensionale Probe in einzelnen, unterschiedlich tiefen Ebenen Punkt für Punkt abgetastet wird und die dabei gewonnenen Bildinformationen nachfolgend zu einer dreidimensionalen Abbildung der Probe zusammengesetzt werden, beruht die SPIM-Technologie auf der Weitfeldmikroskopie und ermöglicht die bildliche Darstellung der Probe auf der Grundlage von optischen Schnitten durch einzelne Ebenen der Probe.

Die Vorteile der SPIM-Technologie bestehen unter anderem in der größeren Geschwindigkeit, mit der die Erfassung der Bildinformationen erfolgt, der geringeren Gefahr des Ausbleichens von biologischen Proben sowie einer erweiterten Eindringtiefe des Fokus in die Probe.

Prinzipiell werden bei der SPIM-Technologie Fluorophore, die in der Probe enthalten sind oder in diese eingebracht werden, mit Laserlicht angeregt, welches zu einem sogenannten Lichtblatt geformt ist. Mit dem Lichtblatt wird jeweils eine ausgewählte Ebene in der Tiefe der Probe beleuchtet und mit einer Abbildungsoptik ein Bild dieser Probenebene in Form eines optischen Schnitts gewonnen. Im Wesentlichen äquivalent zu einer solchen Anregung mit einem statischen Lichtblatt ist die schnelle Hin- und Herbewegung eines dünnen, rotationssymmetrischen Laserstrahls in der Fokusebene des Abbildungsobjektivs. Effektiv, d.h. im zeitlichen Mittel über den Zeitraum der Beobachtung, ergibt sich somit ebenfalls die Form eines SPIM - Lichtblatts.

Die SPIM-Technologie ist beispielsweise beschrieben in Stelzer et al., Optics Letters 31, 1477 (2006), in Stelzer et al., Science 305, 1007 (2004), in der DE 102 57 423 A1 und in der WO2004/0530558 A1.

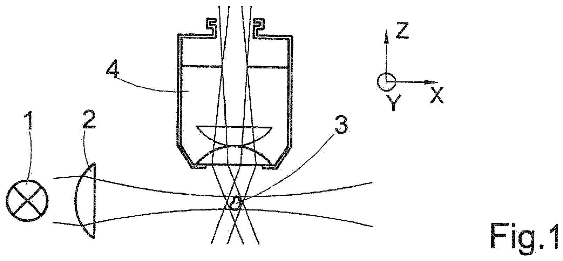

In Fig.1 ist zunächst der grundsätzliche Aufbau eines SPIM-Mikroskops dargestellt. Das Licht einer Beleuchtungsquelle 1 wird über eine Beleuchtungsoptik 2 zu einem Lichtblatt geformt und auf eine Probe 3 gelenkt. Probe und Lichtblatt befinden sich in der Fokusebene eines Abbildungsobjektivs 4. Die optische Achse des Abbildungsobjektivs 4 steht senkrecht zu der Richtung, aus der die Probe 3 beleuchtet wird. Die Beleuchtungsoptik 2 umfasst in der Regel mehrere optische Elemente, die das kohärente Licht der Beleuchtungsquelle 1 kollimieren und daraus ein Lichtblatt formen. Im Stand der Technik umfasst die Beleuchtungsoptik 2 in der Regel auch eine Zylinderlinse, deren flache Seite zur Probe weist und deren gewölbte Seite in Richtung der Beleuchtungsquelle weist.

Schematisch ist eine Probenhalterung PH dargestellt mittels derer die Probe, beispielsweise über eine Ansteuereinheit A gesteuert, motorisch in Richtung der optischen Achse des Objektives 4 bewegt wird.

Die beschriebene "Lichtscheibenmikroskopie" (Light sheet microscopy) kombiniert optische Schnitte mit einer Weitfeld-Detektion über eine ortsauflösende Kamera (CCD Kamera), indem die komplette laterale fokale Ebene (xy-Ebene) des Detektionsobjektives mit einem dünnen Lichtblatt beleuchtet wird (Abbildung 1). Die Lichtblattbeleuchtung erfolgt rechtwinklig zur Detektionsachse (z-Achse).

Die Probe wird in dem überlappenden Bereich von Beleuchtung und Detektion platziert. Fluoreszenzsignale, die durch das Beleuchtungslichtblatt angeregt wird, werden über das gesamte Gesichtsfeld des Detektionsobjektivs auf die Kamera abgebildet. Durch die rechtwinklige Beleuchtung mit einem dünnen Lichtblatt wird nur ein kleiner Teil der axialen Ausdehnung der Detektionsoptik beleuchtet und somit ein optischer Schnitt erzeugt. Um einen anderen Bereich in der Probe zu beobachten wird die Probe, unabhängig von der Optik, mit einer Probenpositioniereinheit durch das Lichtblatt gefahren. Durch das Aufnehmen optischer Schnitte an verschiedenen Probenpositionen entlang der Detektionsachse ist Aufnahme von dreidimensionalen Bildstapeln möglich. Diese Bildstapel können anschließend zu einem 3D-Bild rekonstruiert werden.

Dazu ist die Aufnahme mehrerer dreidimensionaler Bildstapel aus verschiedenen Winkeln notwendig. Ein Bildstapel umfasst beispielsweise 200 Bilder. Es werden mindestens vier unterschiedliche Bestrahlungswinkel Winkel benötigt für ein dreidimensionales Bild.

Für eine gute Bildqualität und ein sauberes "Sectioning" ist die perfekte Überlappung der Beleuchtungs- mit der Detektionsebene besonders kritisch. Durch wechselnde Proben und Brechungsindices ist dieses in der täglichen Arbeit eine immer wiederkehrende Aufgabe.

Die bekannte Relativbewegung von Lichtblatt zu Probe und Objektiv führt dazu, dass während der Justage die beleuchtete z-Ebene innerhalb der Probe und damit die Probenebene, die zur Bewertung herangezogen wird, variiert. Wird solch ein Justageverfahren auf eine reale Probe angewendet, führt die z-Bewegung dazu, dass die Informationen in den einzelnen Justagebildern stark variieren und somit eine Bewertung des Justagebildes nicht mehr möglich ist. Mit geringerem Ausmaß betrifft dieses Problem auch die Justageverfahren mit Referenzprobe. Allerdings sind diese Proben homogener, so dass es selten auffällt Eine manuelle, usergesteuerte Justage ist zeitintensiv und erfordert viel Erfahrung. Dabei konzentriert sich der Anwender zur einfacheren Bewertung meist auf stark strukturierte Bildbereiche, deren Informationsgehalt allerdings signifikant von der z-Ebene der Probe abhängig ist. Variiert diese z-Ebene während des Justageverfahrens, führt dieses häufig zu einer Falschbewertung

Der Stand der Technik ist weiterhin in den Patentanmeldungen DE 102007017598 A1 und DE 102007045897 A1 dargestellt. Die bekannten Justageverfahren setzen zum einen voraus, dass ein fluoreszierendes Referenzobjekt (z.B. Beads/Fiducials oder ein homogenes fluoreszierendes Objekt) anstatt der Probe oder in der Probe positioniert ist. Diese Referenzobjekte werden mit dem flächigen Lichtblatt beleuchtet und anhand des Kontrasts oder der PSF (z.B. im Falle der Beads) wird der optimale Justagepunkt gesucht. Zum anderen ist bei manchen Verfahren vorgesehen, dass das fluoreszierende Referenzobjekt durch das Beleuchtungslicht mit einer Referenzstruktur beaufschlagt wird. Dieses wird beispielsweise durch ein Gitter in einer zur Objektebene konjugierten Ebene oder durch eine Modulation des gescannten Lichtblatts ausgeführt.

Justageverfahren anhand einer Referenzprobe setzen voraus, dass die Referenzprobe in allen optischen Eigenschaften (Brechungsindex, Oberflächenkrümmung, Eindringtiefe,...) komplett identisch zur realen Anwender-Probe ist. Dieses ist für das vorhandene Spektrum von prädestinierten Proben nicht realisierbar. Insofern nehmen diese Justageverfahren Abweichungen von der optimalen Justage in Kauf. Optische Effekte durch inhomogene Probenstrukturen wie z. B. verschiedene Zellstrukturen können gar nicht berücksichtigt werden. Ähnliche Effekte treten auf, wenn sich beispielsweise während der Aufnahme eines Bildstapels die Eindringtiefe in das Probenmedium stark ändert.

Die allgemeine Lichtblattjustage gemäß dem Stand der Technik ist beispielsweise bei Greger et al. (Greger et al., Rev. Sci. Instr.78, 023705, 2007) beschrieben (Abschnitt II B.). Dabei wird ein Gimbal-Mount und ein Teleskop verwendet, um mit Hilfe einer Winkelbewegung das Lichtblatt alleine entlang der z-Richtung der Detektionsoptik zu bewegen. Diese Ausrichtung der Beleuchtungsoptik relativ zur Detektionsoptik entspricht auch dem älteren Stand der Technik gemäß Voie et al. (Journal of Microscopy 170, 229, 1992; Abschnitt "illumination system") oder Santi et al. (BioTechniques 46, 287, 2009, Suppl. Mat.). Bei Krzic et al (Nat Methods 9, 730, 2012, Suppl.) ist die dreidimensionale Lichtblattjustage für ein scannendes Lichtblatt mit Hilfe eines "geparkten" Laserstrahls beschrieben, der eine fluoreszierende Lösung beleuchtet. Dabei wird unter anderem der Waist des Laserstrahls ausgenutzt. Ebenfalls beschrieben ist die Ausnutzung von Streulicht. Auch ist hier die beschrieben, wie die Lichtblattjustage durch Bewegung der Detektionsoptik relativ zum Lichtblatt in einer fluoreszierenden Lösung oder Referenzprobe bewerkstelligt wird. In Keller et al. (Science 322, 1065, 2008, Supp) ist ein Aufbau mit beweglicher Detektionsoptik beschrieben, die hier aber nicht im Sinne einer Lichtblattjustage beschrieben wird.

In US 2011/0304723 A1 wird ein Lichtblattmikroskop mit Besselstrahlen beschrieben.

In WO 2008/125204 A1 wird ein Verfahren zum Positionieren des Lichtblatts zur Fokusebene in einem Mikroskop beschrieben.

### Darstellung der erfinderischen Lösungsansätze sowie Ausführungsbeispiele

Die Erfindung wird durch die Merkmale der unabhängigen Patentansprüche charakterisiert.

Vorteilhafte Voraussetzung für eine gute, automatisierte Justage ist die Wahl des richtigen Bewertungskriteriums und die Anwendbarkeit auf die echte Probe anstatt einer Referenzstruktur.

Aus dem Stand der Technik ist kein Verfahren bekannt, in dem die zu untersuchende Probe direkt in der Lichtblattjustage verwendet wird, wobei sie zusammen mit dem Lichtblatt relativ zum Objektiv bzw. der Detektionsebene bewegt wird.

Die Erfindung betrifft insbesondere eine vorzugsweise über eine Ansteuereinheit gekoppelten Bewegung des Lichtblatts und der Probe relativ zur vorgegebenen Fokusebene der Detektionseinheit.

Selbstverständlich kann umgekehrt auch das Detektionsobjektiv alleine bewegt werden beziehungsweise alle Elemente können über eine gemeinsame Ansteuereinheit koordiniert zueinander bewegt werden um den erfinderischen Effekt zu erzielen. Wird die Probe nach oder simultan zu einer Verstellung des Lichtblatts nachgeführt, bleibt die betrachtete Proben-Ebene und somit der prinzipielle Bildinhalt identisch. Unterschiede im Bild werden lediglich durch die Justageposition hervorgerufen. Um eine korrekt gekoppelte Bewegung ausführen zu können, werden die beiden Einzelbewegungen vorteilhaft zuvor über eine Kalibrierung hinreichend genau aufeinander abgestimmt.

Zudem ist es für die nachstehend geschilderten Verfahren möglich und vorteilhaft, die zur Justage zu verwendenden Probenstrukturen zuvor mit Hilfe eines anderweitigen Kontrastverfahrens festzustellen und die Probe hiernach relativ zur Detektion auszurichten.

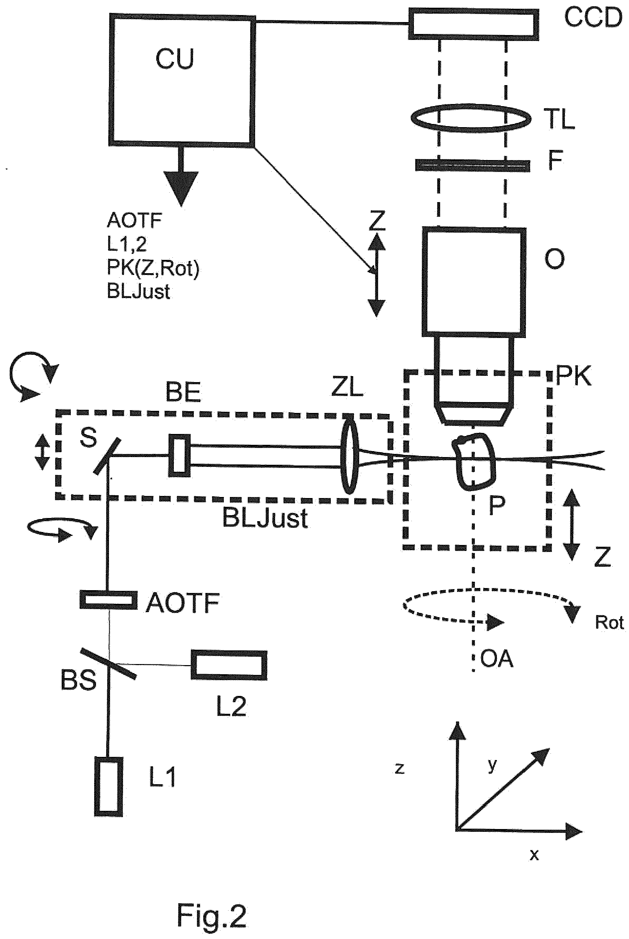

In Fig. 2 ist der Grundaufbau eines SPIM Mikroskops zur Durchführung des erfinderischen Verfahrens dargestellt.

Eine Probe P, die sich in einer Probenkammer PK befinden kann, wobei Probe oder Probenkammer in Richtung einer Z Achse verstellbar angeordnet und auch um die optische Achse des Detektionsobjektives rotierbar angeordnet sind, wird von einem Detektionsstrahlengang erfasst, der aus einem vertikal verstellbaren Detektionsobjektiv O besteht dessen Detektionsachse bzw. optische Achse in Z Richtung verläuft, an das sich in Detektionsrichtung ein vorzugsweise auswechselbarer Lichtfilter F, eine Tubuslinse TL und ein Flächenempfänger CCD anschließen.

Im Wesentlichen senkrecht zur Detektionsachse Z steht, hier in X- Richtung, ein Beleuchtungsstrahlengang, bestehend hier aus zwei über Strahlteiler BS verkoppelten Lasern L1, L2, die über einen AOTF zur Wellenlängenauswahl und Intensitätseinstellung, einen Umlenkspiegel S und eine Strahlaufweitung BE sowie eine anamorphotische Optik wie hier eine Zylinderlinse ZL zur Strahlformung,die flächige Lichtverteilung erzeugen die die Probe durchdringt.

Schematisch dargestellt ist eine Justierungseinheit BLjust, die beispielsweise die Elemente S, BE und ZL in mehreren Richtungen justieren oder verkippen kann. Vorzugsweise erfolgt eine Z- Verstellung der Beleuchtung , dargestellt durch den Vertíkalpfeil und eine Verdrehung der Beleuchtungseinheit um die Z Achse sowie eine Verkippung , hier beispielsweise um die Y Ache, wobei der Drehpunkt der Verkippung durch eine gekoppelte Z Verstellung und Drehung um die Spiegelachse auch in der Probe, beispielsweise in der optischen Achse OA des Detektionsobjektives liegen kann.

Eine gemeinsame Kontroll- und Steuerungseinheit CU, in der Regel gebildet durch einen Rechner und eine Anzeigeeinheit ( Display),
ist mit allen Verstelleinrichtungen wie dem AOTF, der Probenkammerverstellung PK und der Beleuchtungsjustierung BLJust verbunden um das erfindungsgemäße Verfahren ausführen zu können.

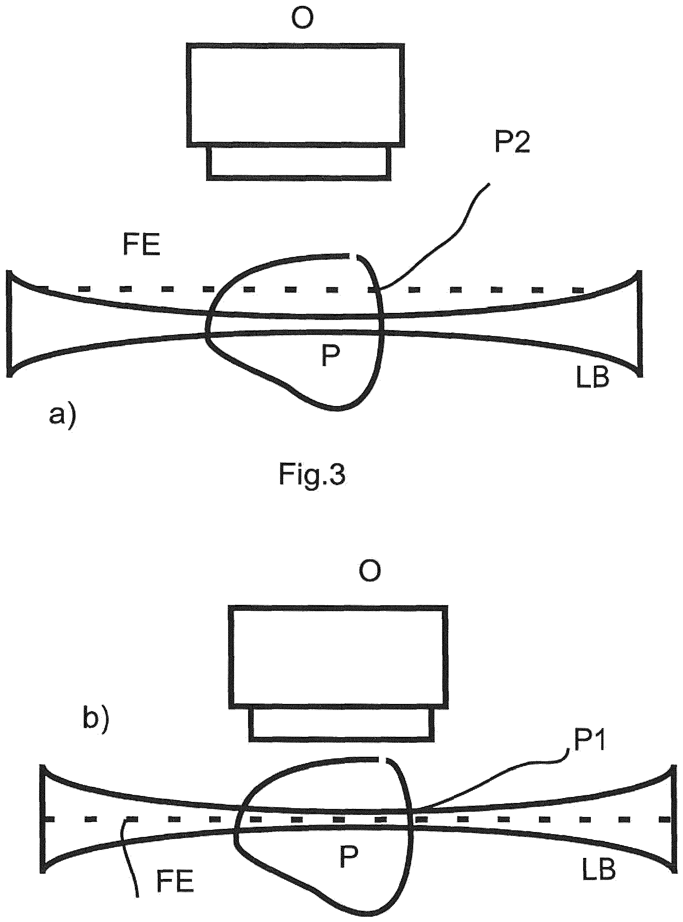

In Fig. 3 -6 ist ausschnitthaft aus der Fig.2 dargestellt:
O: Detektionsobjektiv
P: Als Probe ein Gewebe mit markierten Zellkernen für exemplarische Probenebenen
K: Kamerabild der Probe mit Zellkernen
LB: Bereich der Lichtblattbeleuchtung (z.B. Gaussstrahl)
OA: optische Achse der Beleuchtung ( punktiert)
FE Fokusebene der Detektionsoptik

Abbildung 3a, b zeigt in 3a) den Ausgangszustand eines defokussiertes Lichtblatts. und in 3b) den justierten Zustand durch Verschieben des Lichtblatts. Deutlich wird dass in 3a und 3b unterschiedliche Probenbereiche P1, P2 vom Objektiv O abgebildet werden.

Durch die Erfindung wird nun gewährleistet dass der Zustand in 3b für jede durchfahrene Probenebene gleich sichergestellt wird um einen perfekten Probenschnitt zu realisieren.

Unabhängig von der Erfindung werden folgende beispielhafte Verfahren vorgeschlagen:

### Verfahren 1:

Beim Scharfstellen der Probe durch den Anwender durch Bewegen der Probe bzw., Probenhalterung in Richtung der Detektionsachse des Objektives ( Z- Achse) kann es durch die tatsächlich vorhandenen Unterschiede im Brechungsindex der Probe bzw. Brechungsindexsprünge dazu kommen, dass das Lichtblatt nicht mehr genau in der Brennebene des Detektionsobjektives liegt.

Daher wird in einem Kalibrierschritt vor der eigentlichen Probenmessung eine Kalibriertabelle aufgenommen, die für die real verwendete Probe eine Z- Verstellung durchführt bei der die reale Position des Lichtblattes in Abhängigkeit von der vertikalen Position der Probe (und damit in Abhängigkeit vom Brechungsindex der Probe erfasst wird.

Zu diesem Zweck wird für unterschiedliche scharfgestellte, d.h. fokussierte Probenbereiche einer realen Probe, , die jeweilige Höhenposition des Lichtblattes zusammen mit an seiner Position an seinen Verstellmitteln erfasst und abgespeichert.

Die Erfassung der Lichtblattposition erfolgt beispielsweise folgendermaßen:
Es erfolgt eine Z- Verstellung der Probe und die jeweiligen Z Positionen bilden einen Speicherwert mit Z1- Zi ( i=1-n).

Für die Z1-Zi wird jeweils das Lichtblatt mindestens vertikal verstellt, vorzugsweise davor oder danach auch verkippt ( durch die Ansteuereinheit Cu in Fig.2 beispielsweise).

Die Verstellung und/ oder Verkippung erfolgt vorzugsweise um den jeweiligen Wert Zi herum.

Anhand der Schärfebestimmung bzw. Kontrastanalyse durch die CCD in Fig.2 ( auch visuell durch den Betrachter denkbar) und die Auswerteeinheit CU wird der Wert der höchsten Schärfe/ eines optimalen Kontrastes
mit den dazu eingestellten Werten der Justiereinheit BLJust in Fig. 2 durch Cu, zugeordnet zum jeweiligen Wert Zi, abgespeichert ( in der Kalibriertabelle) bzw. die damit eingestellte Lichtblattposition auch zusätzlich direkt für eine Messung verwendet.

Diese Positionsbestimmung des Lichtblattes zu den Zi Werten wird anschließende verwendet um, wenn der Anwender eine bestimmte Z- Ebene in der Probe betrachtet bzw. diese detektiert wird, eine entsprechende Korrektur vorzunehmen, d.h. die tatsächliche Lichtblattlage für genau diese scharfgestellte Probenebene einzustellen damit das tatsächliche Lichtblatt trotz der erwähnten Schwankungen des Brechungsindex immer in der tatsächlich betrachteten oder detektierten Fokusebene liegt..

### Verfahren 2:

Während der Probenverstellung in eine neue Z- Ebene wird gleichzeitig oder unmittelbar anschließend das Lichtblatt in Relation zur Probe bewegt ( beispielsweise unter Bestimmung des optimalen Kontrastes), mindestens in Z - Richtung , vorzugsweise auch verkippt um eine Drehachse, beispielsweise in der Mitte der Brennebene des Detektionsobjektives.

Beispielsweise kann eine gekrümmte Oberfläche oder Grenzfläche in der Probe durch ihren Brechungsindexverlauf dazu führen dass das Lichtblatt von einer horizontalen Position in eine verkippte Position " weggebeugt" wird.

Dies wird vorteilhaft durch das Verfahren wieder ausgeglichen.

Das kann visuell oder automatisch erfolgen (analog zu Autofokusverfahren die mit Kontrasteinstellung funktionieren),
Die Verknüpfung der Bewegungen der Probe in Z- Richtung und der Lichtblattverstellung sowie die Auswertung des Probenkontrastes erfolgt vorzugsweise in der Steuer- und Recheneinheit XX

Vorteilhaft können die Verfahren 1 und 2 auch in verknüpfter Form angewendet werden.

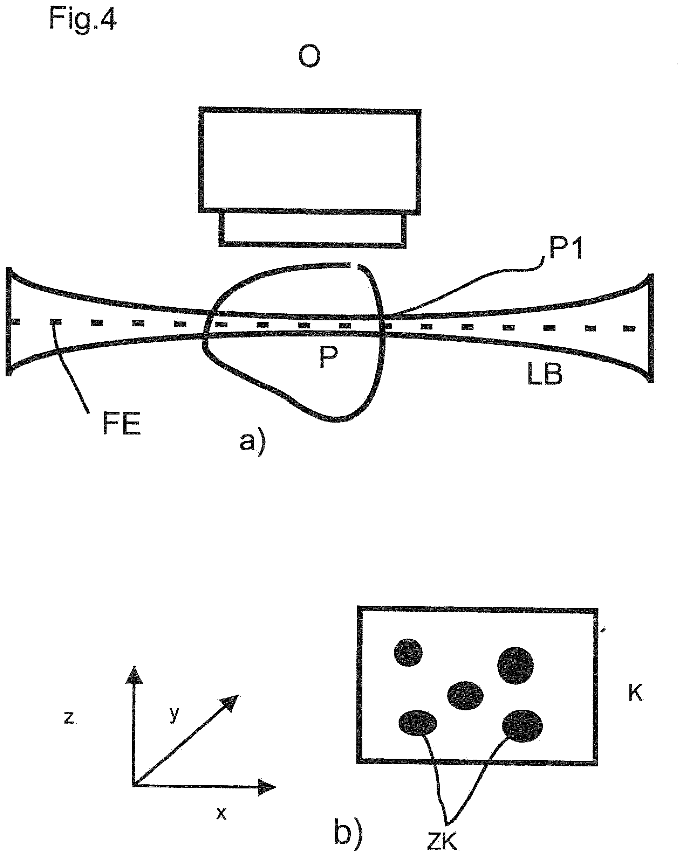

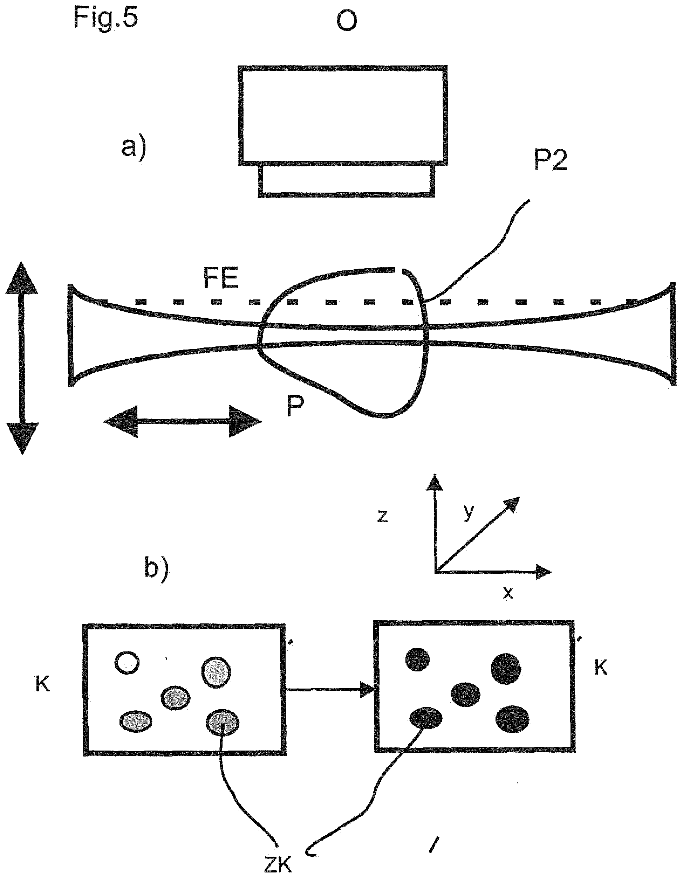

In Abbildung 4-6 ist dargestellt, welche durch die optischen Eigenschaften der Probe hervorgerufenen Effekte beispielsweise bei der erwähnten Aufnahme eine Bildstapels auftreten können. Hierzu sind drei Positionen der Probe P relativ zum Detektionsobjektiv O dargestellt. Auf etwaige zusätzliche Einrichtungen wie eine Probenkammer mit Immersionsmedium wurde in der Darstellung verzichtet. Bei der Probe kann es sich beispielsweise exemplarisch um den Ausschnitt eines Zellgewebes handeln, bei welchen die Zellkerne durch einen Fluoreszenzmarker sichtbar gemacht werden.

In der Position nach 4a) und b) überlappt der Bereich der Lichtblattbeleuchtung vollständig mit der Fokusebene des Detektionsobjektivs, so dass die in der Fokusebene der Detektionsoptik O befindlichen Zellkerne ZK mit annähernd gleichen Kontrast im Kamerabild K registriert werden.

In der Position nach 5a) und b) treten nun aufgrund der durch die unterschiedliche Probenposition geänderten optischen Weglänge zwei Effekte auf: Zum einen verschiebt sich die Fokusebene FE der Detektion gegenüber der nominellen optischen Achse der Beleuchtung LB in z-Richtung. Die in der Fokusebene befindlichen Zellkerne können nun aufgrund des verminderten Überlapps mit der Lichtblattbeleuchtung nicht mehr mit vollem Kontrast dargestellt werden. Weiterhin kann es auch es auch in der Beleuchtung zum einem Fokusshift entlang der x-Richtung kommen, so dass es aufgrund der inhomogenen Intensitätsverteilung im Beleuchtungsstrahl auch zu einer entsprechenden Bildinhomogenität kommt.

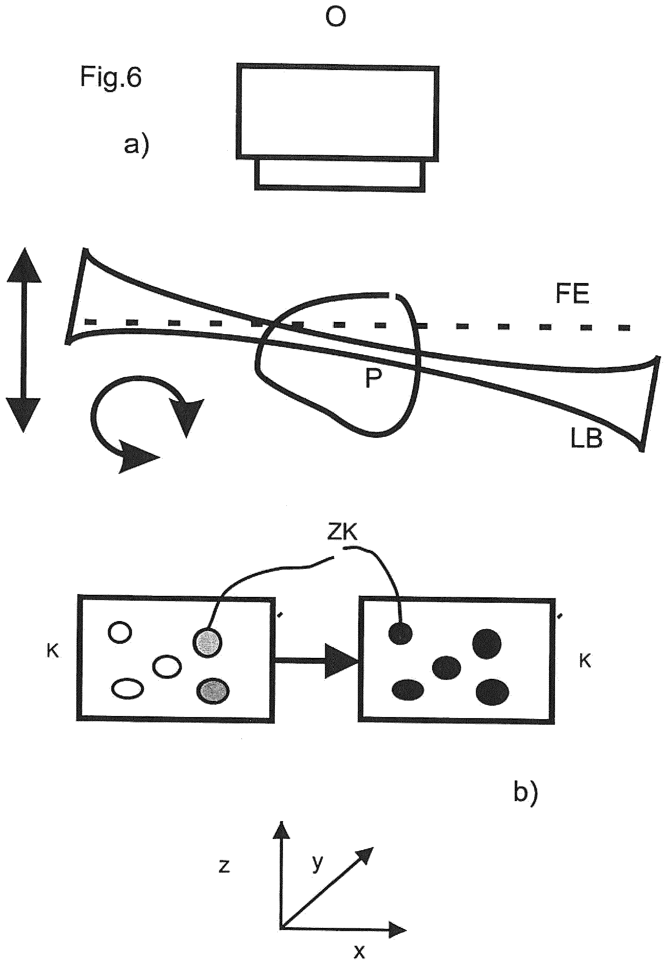

In der Position nach Fig.6a) und b) tritt neben einem erweiterten Fokusshift in der Detektion zusätzlich noch eine Verkippung des Lichtblatt auf, da die der Beleuchtungsstrahl an der Probenoberfläche durch einen Brechungsindexsprung entsprechend abgelenkt wird.

Die beschriebenen Effekte sind exemplarisch dargestellt, Selbstverständlich ist die Situation im Normalfall noch komplexer, da sich die Probe mitunter durch eine komplizierte, inhomogene Permittivität auszeichnet, was sich beispielsweise auch im Auftreten mehrere optischer Grenzflächen innerhalb des Probenvolumens äußern kann.

Im Stand der Technik sind keine Verfahren bekannt, die derartige Artefakte direkt kompensieren wie die oben beschriebenen Verfahren .

### Weitere Ausgestaltungen

### [A]

Die gekoppelte Bewegung von Lichtblatt und Probe relativ zueinander vereinfacht das manuelle Justageverfahren sehr. Bei diesem Verfahren bewertet der Anwender im Allgemeinen visuell die Bildqualität. Da er sich nun auf die Bildinformation in einer stationär gehaltenen Proben-Ebene konzentrieren kann, wird das Justageverfahren intuitiver und zielorientierter. Die oben beschriebenen Probleme treten nicht mehr auf.

### [B]

Ein zweiter Teilaspekt besteht darin, dass mithilfe der gekoppelten Bewegung eine automatische Lichtblattjustage in realen Proben möglich ist. Das Hilfsmittel einer Referenzprobe, sei es in der Ausführung einer homogen fluoreszierenden Probe oder von bestimmten Referenzobjekten wie z. B. Beads, ist nicht mehr nötig. Da durch die gekoppelte Justagebewegung immer dieselbe Probenebene zur Bewertung herangezogen wird, ist die generell vorhandene Bildinformation irrelevant. Die gekoppelte Bewegung ist für alle automatischen Justageverfahren vorteilhaft, sei es unter Verwendung eines flächigen oder eines strukturierten Lichtblatts, bei Bewertung des Kontrastes, der Modulationstiefe oder der PSF.

### [C]

Die Methoden der Lichtblattmikroskopie basieren darauf, dass durch eine Relativbewegung von Probe und Fokusebene der Detektion ein Bildstapel (z-Stapel) aufgenommen wird. Aufgrund von Probeninhomogenitäten oder auch der Eindringtiefe in das Probenmedium, ist die optimale Justageposition für das Lichtblatt von der z-Ebene abhängig. Der Vorteil der Erfindung besteht darin, dass durch die gekoppelte Bewegung und damit durch die Anwendbarkeit der Justageverfahren auf alle Proben - insbesondere reale Proben - objektspezifische Inhomogenitäten verschiedener Probenebenen, die je nach Ebene eine andere optimale Justageposition benötigen, herauskalibriert werden können. Ein erfindungsgemäßes Verfahren gestaltet sich beispielsweise folgendermaßen:
1. Für eine Untermenge von z-Ebenen (= Probenebenen) wird mittels des bevorzugten Bewertungsalgorithmus innerhalb der realen Probe die optimale Justageposition ermittelt.
2. Die optimale Justageposition für die z-Ebenen zwischen diesen Stützebenen wird über eine geeignete Funktion (polynomisch, spline, ...) interpoliert.
3. Während der z-Stapel aufgenommen wird, wird für jede z-Ebene die spezifische optimale Justageposition des Lichtblatts eingestellt. Auch dieses entspricht einer gekoppelten Bewegung, beispielsweise von Probe und Lichtblatt. Insbesondere kann dies auch eine Winkelverstellung mit beinhalten (siehe >Fig. 6).
4. Durch die optimale Justageposition für jede einzelne Bildebene wird ein z-Stapel mit optimaler Bildqualität erzielt.
5. Etwaige durch die Lichtblattnachführung auftretenden Verzerrungen im 3D-Gesamtbild der Probe können zusätzlich rechnerisch korrigiert werden.

### [D]

Im Weiteren basieren die Methoden der Lichtblattmikroskopie darauf, dass durch eine relative Drehung der Probe zur Detektions- und Beleuchtungsrichtung und der anschließenden Aufnahme mehrerer z-Stapel unter verschiedenen Winkeln (=Views), die Rekonstruktion eines 3D-Bildes möglich ist. Für ein optimales Bildergebnis ist es auch hier wichtig, dass für jede einzelne Beleuchtungsrichtung die optimale Justageposition des Lichtblatts eingestellt wird, da die Eindringtiefe und die optischen Eigenschaften der Probe aus jeder Beleuchtungsrichtung unterschiedlich sind. Dieses ist lediglich durch eine simultane oder nacheinander ausgeführte Bewegung der Probe und des Lichtblatts möglich.

### [E]

Ein noch besseres Bildergebnis wird erzielt, wenn Teilaspekt [B], Teilaspekt [C] und Teilaspekt [D] kombiniert werden.

### [F]

Bei einem z-Stapel und/oder einer Multiviewaufnahme kann es durch Bewegung der Probe auch zu einer veränderten Fokusablage in der Beleuchtungsrichtung relativ zum Bildfeld kommen. Eine entsprechende Nachführung der Lichtblattlage in x-Richtung kann dementsprechend vorteilhaft sein. Diese kann natürlich mit der beschriebenen Bewegung in z-Richtung gekoppelt sein.

## Patentansprüche

1. Verfahren zur SPIM-Mikroskopie mit einem Mikroskop mit
- einer Beleuchtungseinrichtung, umfassend eine Beleuchtungslichtquelle (L1, L2) und einen Beleuchtungsstrahlengang zur Beleuchtung einer Probe (P) mit einem Lichtblatt (LB),
- einer Detektierungseinrichtung zur Detektierung von Licht, das von der Probe abgestrahlt wird, mit einem Objektiv (O),
- wobei das Lichtblatt (LB) im Fokus (FE) des Objektives (O) oder einer definierten Ebene in der Nähe des Fokus (FE) des Abbildungsobjektivs (O) im Wesentlichen eben ist und das Objektiv (O) eine optische Achse aufweist, die die Ebene des Lichtblattes (LB) in einem von Null verschiedenen Winkel, bevorzugt senkrecht schneidet und Justiermittel zur Verstellung des Beleuchtungsstrahlenganges mindestens entlang der optischen Achse des Detektionsobjektives (O) vorgesehen sind,
wobei zur Erfassung unterschiedlicher Probeneben durch das Lichtblatt (LB) eine Relativbewegung von Probe (P) und Fokusebene (FE) der Detektion in Richtung der optischen Achse des Objektives (O) erfolgt und ein Bildstapel aufgenommen wird, **dadurch gekennzeichnet, dass**
- in einem ersten Schritt anhand der Probe (P) eine Kalibrierung erfolgt, indem in unterschiedlichen Probenebenen als Stützebenen die tatsächliche Lage des Lichtblattes (LB) in Abhängigkeit von der Lage der Probe (P) erfasst und eine jeweilige Justageposition des Lichtblatts ermittelt wird und
- in einem zweiten Schritt bei der relativen Probenverstellung in eine neue Z-Ebene gleichzeitig oder anschließend durch Bewegen des Lichtblatts (LB) in Relation zur Probe (P) mindestens in Z-Richtung eine Justierung der Lage des Lichtblattes (LB) zur Fokusebene (FE) des Detektionsobjektives (O) erfolgt, wobei für Probenebenen zwischen den Stützebenen die spezifische Justageposition über eine Funktion interpoliert wird.

2. Verfahren nach Anspruch 1
wobei bei der Relativbewegung des Lichtblatts (LB) zur Probe (P) eine Erfassung und Bewertung des Probenkontrastes erfolgt.

3. Verfahren nach einem der Ansprüche 1 bis 2,
wobei die Relativbewegung des Lichtblatts (LB) zur Probe (P) erfolgt bis ein maximaler oder anhand von Kriterien optimierter Bildkontrast vorliegt.

4. Verfahren nach einem der Ansprüche 1 bis 3,
wobei eine Relativbewegung des Lichtblattes (LB) um eine eingestellte vertikale Fokuslage (FE) des Detektionsobjektives (O) herum erfolgt, um den maximalen oder optimalen Kontrast einzustellen.

5. Verfahren nach mindestens einem der vorangehenden Ansprüche wobei die Kopplung der Bewegung des Lichtblattes (LB) relativ zur Probe (P) über eine Ansteuereinheit (CU) erfolgt, die mit den Einstellmitteln für die Beleuchtung verbunden ist.

6. Verfahren nach mindestens einem der vorangehenden Ansprüche, wobei eine Verkippung des Beleuchtungsstrahlenganges um mindestens eine Achse, vorzugsweise um eine Kippachse die in der optischen Achse des Objektives (O) liegt, erfolgt.

7. Mikroskop, eingerichtet zur Durchführung des Verfahrens nach einem der vorangehenden Patentansprüche.

8. Mikroskop nach Anspruch 7, wobei das Objektiv in Richtung seiner optischen Achse verstellbar ist.

9. Verfahren nach einem der Ansprüche 1 bis 6, wobei das Objektiv (O) in Richtung seiner optischen Achse verstellbar ist.

## Claims

1. Method for SPIM microscopy using a microscope comprising
- an illumination device comprising an illumination light source (L1, L2) and an illumination beam path for illuminating a specimen (P) by way of a light sheet (LB),
- a detection device for detecting light emitted by the specimen, comprising an objective (O),
- wherein the light sheet (LB) is substantially planar in the focus (FE) of the objective (O) or in a defined plane in the vicinity of the focus (FE) of the imaging objective (O) and the objective (O) has an optical axis which intersects the plane of the light sheet (LB) at an angle that differs from zero, preferably at right angles, and adjustment means are provided for adjusting the illumination beam path at least along the optical axis of the detection objective (O),
wherein to measure different specimen planes by way of the light sheet (LB) a relative movement of specimen (P) and focal plane (FE) of the detection is implemented in the direction of the optical axis of the objective (O) and an image stack is recorded,
**characterized in that**
- in a first step there is a calibration on the basis of the specimen (P) by virtue of the actual relative position of the light sheet (LB) being measured as a function of the relative position of the specimen (P) in different specimen planes as sampling planes, and a respective adjustment position of the light sheet is ascertained, and
- in a second step there is an adjustment of the relative position of the light sheet (LB) in relation to the focal plane (FE) of the detection objective (O) by moving the light sheet (LB) at least in the Z-direction in relation to the specimen (P), at the same time as or following the relative specimen adjustment into a new Z-plane, wherein the specific adjustment position for specimen planes between the sampling planes is interpolated by way of a function.

2. Method according to Claim 1,
wherein the specimen contrast is measured and assessed during the relative movement of the light sheet (LB) in relation to the specimen (P).

3. Method according to either one of Claims 1 and 2, wherein the relative movement of the light sheet (LB) in relation to the specimen (P) is implemented until a maximum image contrast or an image contrast that has been optimized on the basis of criteria is present.

4. Method according to any one of Claims 1 to 3, wherein a relative movement of the light sheet (LB) is implemented around a set vertical relative focal position (FE) of the detection objective (O) in order to set the maximal or optimal contrast.

5. Method according to at least one of the preceding claims,
wherein the movement of the light sheet (LB) relative to the specimen (P) is coupled by way of a control unit (CU) which is connected to the setting means for the illumination.

6. Method according to at least one of the preceding claims, wherein the illumination beam path is tilted about at least one axis, preferably about a tilt axis located in the optical axis of the objective (0).

7. Microscope configured to carry out the method according to any one of the preceding patent claims.

8. Microscope according to Claim 7, wherein the objective is adjustable in the direction of its optical axis.

9. Method according to any one of Claims 1 to 6, wherein the objective (O) is adjustable in the direction of its optical axis.

## Revendications

1. Procédé de microscopie SPIM à l'aide d'un microscope comprenant
- un dispositif d'éclairage muni d'une source de lumière d'éclairage (L1, L2) et d'un trajet de faisceau d'éclairage et destiné à éclairer un échantillon (P) avec une nappe de lumière (LB),
- un dispositif de détection de la lumière, émise par l'échantillon, au moyen d'un objectif (O),
- la nappe de lumière (LB) dans le foyer (FE) de l'objectif (O) ou dans un plan défini au voisinage du foyer (FE) de l'objectif de reproduction (O) étant sensiblement plane et l'objectif (O) comportant un axe optique qui coupe le plan de la nappe de lumière (LB) avec un angle différent de zéro, de préférence perpendiculairement, et des moyens de réglage étant prévus pour régler le trajet de faisceau d'éclairage au moins le long de l'axe optique de l'objectif de détection (O),
un mouvement relatif de l'échantillon (P) et du plan focal (FE) de la détection étant effectué en direction de l'axe optique de l'objectif (O) et un empilement d'images étant enregistré afin de détecter différents plans d'échantillon passant par la nappe de lumière (LB), **caractérisé en ce que**
- dans une première étape, un étalonnage est effectué à partir de l'échantillon (P) par détection de la position réelle de la nappe de lumière (LB) en fonction de la position de l'échantillon (P), et par détermination d'une position de réglage respective de la nappe de lumière, dans différents plans d'échantillon servant de plans de support et
- dans une deuxième étape, un réglage de la position de la nappe de lumière (LB) par rapport au plan focal (FE) de l'objectif de détection (O) est effectué, simultanément ou consécutivement au réglage relatif de l'échantillon dans un nouveau plan Z, par déplacement de la nappe de lumière (LB) par rapport à l'échantillon (P) au moins dans la direction Z, la position de réglage spécifique étant interpolée par une fonction pour des plans d'échantillon situés entre les plans de support.

2. Procédé selon la revendication 1,
une détection et une évaluation du contraste de l'échantillon étant effectuées lors du mouvement relatif de la nappe de lumière (LB) par rapport à l'échantillon (P).

3. Procédé selon l'une des revendications 1 et 2,
le mouvement relatif de la nappe de lumière (LB) par rapport à l'échantillon (P) étant effectué jusqu'à obtenir un contraste d'image maximal ou optimisé sur la base de critères.

4. Procédé selon l'une des revendications 1 à 3,
un mouvement relatif de la nappe de lumière (LB) étant effectué autour d'une position de focalisation verticale (FE) réglée de l'objectif de détection (O) afin de régler le contraste maximal ou optimal.

5. Procédé selon l'une au moins des revendications précédentes,
le couplage du mouvement de la nappe de lumière (LB) par rapport à l'échantillon (P) étant effectué par une unité de commande (CU) qui est reliée aux moyens de réglage de l'éclairage.

6. Procédé selon l'une au moins des revendications précédentes, le trajet de faisceau d'éclairage étant incliné sur au moins un axe, de préférence sur un axe d'inclinaison qui est situé dans l'axe optique de l'objectif (O).

7. Microscope, conçu pour mettre en œuvre le procédé selon l'une des revendications précédentes.

8. Microscope selon la revendication 7, l'objectif étant réglable dans la direction de son axe optique.

9. Procédé selon l'une des revendications 1 à 6, l'objectif (O) étant réglable dans la direction de son axe optique.
